Europäisches Patentamt

European Patent Office

Office européen des brevets

(11) Publication number: **0 060 634**
**B1**

(12) **EUROPEAN PATENT SPECIFICATION**

(45) Date of publication of patent specification: **20.02.85**

(21) Application number: **82300970.9**

(22) Date of filing: **25.02.82**

(51) Int. Cl.⁴: **B 01 F 5/00, G 01 N 1/20**

(54) **Liquid sampling device.**

(30) Priority: **13.03.81 GB 8107927**
**15.10.81 GB 8131120**

(43) Date of publication of application:
**22.09.82 Bulletin 82/38**

(45) Publication of the grant of the patent:
**20.02.85 Bulletin 85/08**

(84) Designated Contracting States:
**DE FR GB IT NL**

(56) References cited:
**EP-A-0 044 652**
**DE-A-1 598 002**
**FR-A-1 555 966**
**FR-A-2 187 398**
**GB-A-2 030 963**
**US-A-2 306 962**
**US-A-3 334 868**
**US-A-3 826 474**

The file contains technical information
submitted after the application was filed and
not included in this specification

(73) Proprietor: **Moore, Barrett & Redwood Limited**
**Rosscliffe Road Ellesmere Port**
**Wirral Cheshire (GB)**

(72) Inventor: **Hayward, Alan Thomas Joseph, Dr.**
**107 Landor Road Whitnash**
**Leamington Spa Warwickshire (GB)**

(74) Representative: **Bannerman, David Gardner**
**et al**
**Withers & Rogers 4 Dyer's Buildings Holborn**
**London, EC1N 2JT (GB)**

Courier Press, Leamington Spa, England.

## Description

This invention concerns a method and apparatus for agitating a fluid flowing through a pipe in order to render it homogeneous. It is particularly, but by no means exclusively, useful in the oil industry. In the oil industry, crude oil flowing through a pipeline is often metered, for example for the purpose of determining the royalty that has to be paid to the government of the country from which the oil has been taken. As crude oil nearly always contains a considerable amount of water, it is important the that water content be accurately determined so that the royalties to be paid can be adjusted so that no royalty is paid on the water content. Unfortunately, determining the water content accurately is difficult because when crude oil flows in a horizontal pipe much of the water in it tends to settle to the bottom of the pipe. Thus, if samples to be analysed are taken from the centre of the pipe, the analysis tends to yield too low a value for the water content of the oil in the pipe as a whole.

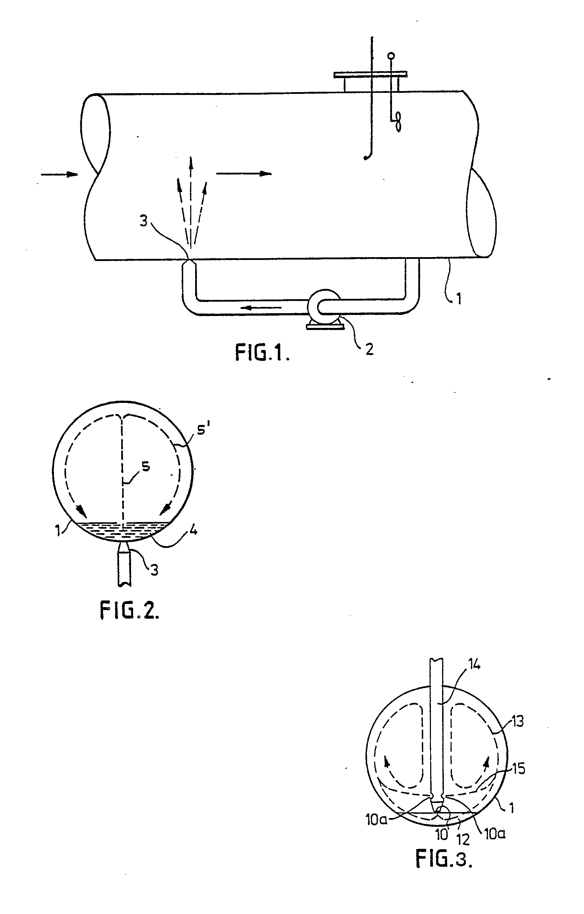

Known equipment for overcoming this problem is shown diagrammatically in Figure 1. This equipment is the subject of GB—A—2030963. In this case a portion of the oil flowing through the pipe 1 is withdrawn from it by means of a pump 2 and then injected back into the pipe in the form of a high-velocity jet 3, which enters at the bottom of the pipe.

This jet 3 has to be very powerful to create sufficient turbulence for the water and oil in the pipe to be rendered homogeneous so that truly representative samples can be taken.

We have now performed tests on a Perspex model simulating the apparatus described in GB—A—2030963 at the National Engineering Laboratory, East Kilbride, Scotland, and as a result we have discovered that the liquid from the jet 3 described the flowpath shown in Figure 2. In effect the powerful stream of liquid emerging from the jet punches a hole through the water layer 4 and atomises the water immediately in front of the jet and closely adjacent to it. This atomised water is carried with the stream 5 across the pipe, where the stream impinges on the opposite portion of the wall. This impingement causes most of the energy of this stream to be expended in local turbulence, so that although two eddies 5′ are formed, which circulate back towards the pipe bottom to give twin-cell rotation, by the time that they have reached the pipe bottom they have lost most of their momentum. Although the streams 5′ pick up large globules of water from the bottom of the pipe, they do not have sufficient energy to atomise these globules, which therefore tend to be circulated around the pipe in un-dispersed form, unless the incoming stream from the jet 3 is very powerful. Such globules quickly sink to the bottom of the pipe so that the samples taken by the downstream sample probe are not, in fact, accurately representative of the contents of the pipe.

Recent research has highlighted a further problem with this method, in that it has now been discovered that the water content of the oil tends not to be constant, but rather to rise and fall suddenly. When the water content is large, an even larger amount of water left is undispersed by the jet 3.

Comparative tests carried out at the same time at the National Engineering Laboratory have established that the method and apparatus of the present invention give what in practice is perfect homogenisation of the pipe contents, using a jet of much lower energy than in the apparatus described above.

According to one aspect of the invention there is provided a method of agitating a liquid material flowing along a substantially horizontal portion of a pipe of circular cross-section, which liquid material comprises first and second phases of different densities, so that the heavier phase tends to accumulate in the pipe bottom, whereby a liquid is injected through a jet located in the vicinity of the pipe bottom, characterised in that the liquid is injected so as to impinge on a flow divider located on or close to the pipe wall, whereby it is divided to form two separate streams of motion in opposite lateral directions, giving rise to two eddies which result in twin-cell rotation of the material.

There is also provided apparatus for carrying out this method, comprising a length of substantially horizontal pipe, and a jet within the pipe, characterised in that the jet is at the end of a tube within the pipe and that a flow divider is aligned with the jet so that fluid emerging from the jet impinges on the flow divider which divides the said fluid into two streams with components of motion in opposite lateral directions, which streams give rise to two eddies which result in twin-cell rotation of the material flowing in the pipe.

According to another aspect of the invention there is provided a method of agitating a liquid material flowing along a substantially horizontal portion of a pipe of circular cross-section, which liquid material comprises first and second phases of different densities, so that the heavier phase tends to accumulate in the pipe bottom, whereby a liquid is injected through jet means located in the vicinity of the pipe bottom, characterised in that the liquid is injected through a pair of opposed jets arranged at substantially the same level forming two separate streams having components of motion in opposite lateral directions, which streams give rise to two eddies which result in twin-cell rotation of the material.

The material flowing through the pipe is preferably oil containing a small proportion of water which forms the heavier phase.

There is also provided apparatus for carrying out this method, comprising a length of substantially horizontal pipe, and jet means within the pipe, characterised in that a pair of opposed jets at substantially the same level are located within the pipe so as to form two separate streams, which streams give rise to two eddies which result in twin-cell rotation of the material.

We further provide apparatus for insertion into a pipe characterised by a tube provided with a jet or jets and a flow divider mounted on the tube to divide a stream or streams of fluid from the jet or jets into two separate eddies.

Where a flow divider is used, this is preferably in the form of a sole plate which may for example be in the sahpe of a cuspate prismoid or a triangular prism. The flow divider may be attached by supports to the jet or jets so that it can easily be installed in and withdrawn from the pipe. If more than one jet is provided, these are preferably disposed symmetrically on either side of the flow divider. The jet or jets are directed towards the flow divider so that the stream from the jet or jets splits into two approximately equal streams then impinge on the wall of the pipe to establish the twin-cell rotation effect. The divided stream also impinges on the heavier phase at high velocity and so causes it to be dispersed into the neighbouring portions of the lighter phase, and this dispersion is then circulated around the pipe by the twin-cell rotation effect. The accumulation of the heavier phase flowing along the pipe is divided into two streams by the flow divider before it is impinged on by the fluid from the jets. Lateral jets may optionally be present.

Where the twin-cell rotation is produced by two or more jets, the injection tube may include two or more jets in the same plane arranged at various angles. A particularly preferred form has one jet directed vertically downwardly and a pair of lateral jets directed substantially horizontally across the pipe and at right angles to its longitudinal axis. In another particularly preferred form two streams of fluid are injected into the pipe. In opposite directions so that each acts on the accumulation of the second phase, before giving rise to the twin-celled rotation. These streams may be in two or more pairs and the pairs may be injected into the pipe at different levels so that each pair contributes to the twin-cell rotation. Preferably, the closer each pair to the centre of the pipe, the lower the energy with which the stream is injected. According to an especially preferred method, two or more pairs of streams are injected into the pipe, the two streams of each pair being injected in opposite directions along the same chord of the pipe cross-section, the pairs of streams being spaced apart and parallel to one another.

The injection tube is preferably retractable to allow a cleaning pig to be passed along the pipe.

In all of the above cases, the fluid to be injected into the pipe through the jet is preferably obtained by drawing off some of the fluid flowing through the pipe itself.

Fluid agitating apparatus according to the invention will now be described by way of example and with reference to Figures 3 and 4 of the accompanying drawings, each of which is a schematic cross-section of a different embodiment. Figure 5 shows in perspective a flow divider in the form of a cuspate prismoid, Figure 6 shows this in cross-section installed in a pipe, Figures 7 and 8 show in cross-section two embodiments where the eddies are produced by fluid streams from separate jets. All the embodiments relate to oil containing water and flowing in a horizontal pipe, the water (being denser) tending to accumulate in the pipe bottom. Similar parts are indicated by similar reference numerals in all of these drawings.

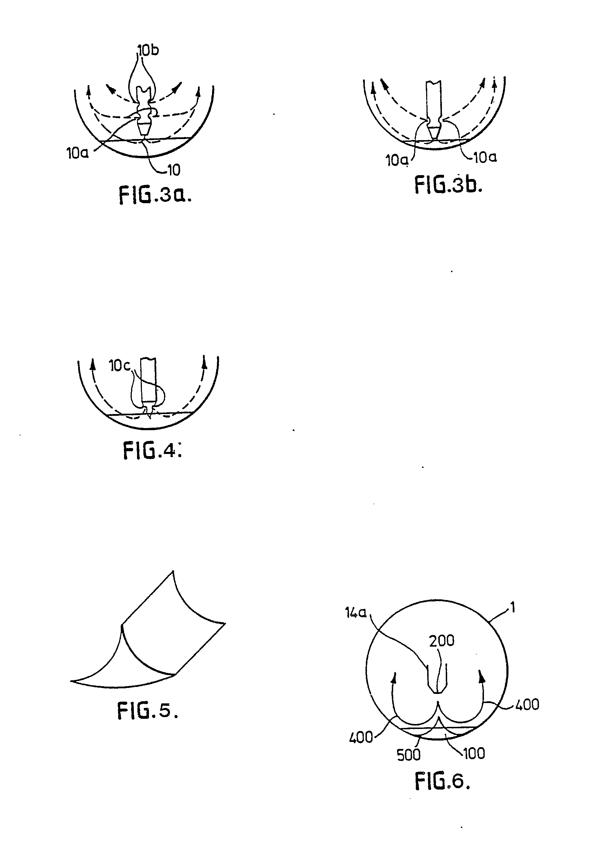

In the embodiment shown in Figure 3, a retractable injection tube 14 having an axial main jet 10 is mounted vertically within the pipe. The tube 14 includes two further jets 10a, each of which is located just above the main jet 10 and is directed horizontally across the pipe at right angles to its longitudinal axis. The streams 15 from the main jet 10 and the lateral jets 10a give rise to a system of twin-cell rotation. This comprises two contra-rotating eddies 13 which circulate back towards the jets 10 and 10a, where they are deflected back upwards again by the streams emerging from the jets. As the stream from the main jet 10 impinges immediately on the accumulated water in the pipe bottom, it has by that time lost very little of its original kinetic energy. Owing to the twin-cell rotation that is caused when the stream impinges on the pipe bottom and divides, reinforced by the lateral streams from the jets 10a, this dispersed material is quickly distributed by the eddies 13 around the remainder of the interior of the pipe. Comparative experiments at the National Engineering Laboratory using a test rig have shown that with this embodiment the three jets having a total power of 15 watts can provide entirely satisfactory homogenisation of a 4% water/96% kerosene mixture in a 100 mm pipe at a flowrate of 3 litre/second, whereas even a 40 watt jet cannot achieve satisfactory homogenisation using the apparatus shown in GB—A—2030963.

The embodiment shown in Figure 3a is similar to that shown in Figure 3 except that it includes two supplementary lateral jets 10b inclined in an upward direction. Figure 3b is similar to Figure 5 except that the lateral jets 10a are inclined upwardly and are not horizontal.

The embodiment shown in Figure 4 is a variant of that shown in Figure 3, except that the three jets have been replaced by two opposed jets 10c inclined at an angle to the vertical.

Figure 6 shows the flow divider 100, which is shown on a larger scale in Figure 5, installed in a pipe 1 in which a two-phase fluid (in this case a liquid) is flowing with the top edge of the flow divider intersecting and perpendicular to the axis of a jet 200 which is at the end of a retractable tube 14a projecting into the pipe 1 so that the jet is directed downwardly towards an accumulation of the second phase 500 of the liquid. The stream from the jet 200 is divided into two streams by the flow divider 100 and these impinge on and break up the accumulation 500. The resulting eddies 400 then continue around the pipe cross-section in opposite directions to give the twin-cell rotation effect, carrying the dispersed second phase with them, and mixing it with the remainder of the pipe contents. The flow divider 100 is preferably connected to the bottom of the tube 14a so that it can be retracted with it.

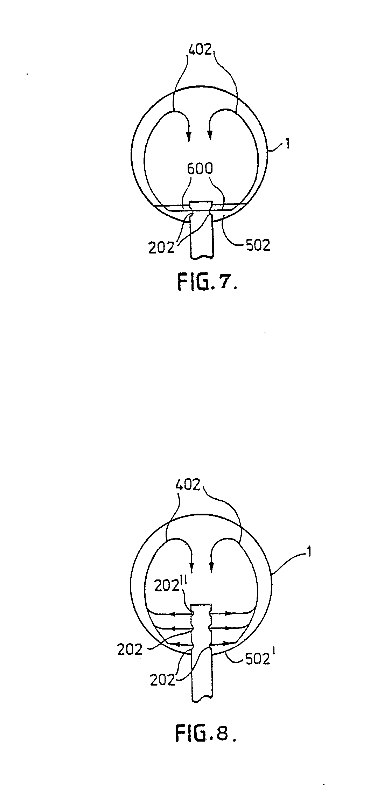

Figure 7 shows a pair of jets 202 mounted on retractable tubes which eject streams of fluid in opposite directions along a chord of the pipe cross-section from a point close to the pipe wall. The streams circulate around the wall until they meet and form eddies 402, rotating in opposite directions around the pipe circumference.

Figure 8 shows a variation of this embodiment 502' for use where the proportion of the heavier phase is high, e.g. in the region of 50%. In this case there are three pairs of jets 202, 202', 202", which ensure that none of the heavier phase escapes being blended with neighbouring portions of the lighter phase. The diameters of the jet pairs are progressively decreased towards the centre of the pipe. The number of pairs of jets can be varied to suit the particular application.

In these embodiments the material injected through the jets is preferably a portion of the contents of the pipe previously withdrawn from the pipe, but can be, or can include, a different material (e.g. a radioactive tracer) which is thereby thoroughly mixed with the contents of the pipe.

## Claims

1. A method of agitating a liquid material flowing along a substantially horizontal portion of a pipe of circular cross-section, which liquid material comprises first and second phases of different densities, so that the heavier phase tends to accumulate in the pipe bottom, whereby a liquid is injected through a jet located in the vicinity of the pipe bottom, characterised in that the liquid is injected so as to impinge on a flow divider located on or close to the pipe wall, whereby it is divided to form two separate streams of motion in opposite lateral directions, giving rise to two eddies which result in twin-cell rotation of the material.

2. A method of agitating a liquid material flowing along a substantially horizontal portion of a pipe of circular cross-section, which liquid material comprises first and second phases of different densities, so that the heavier phase tends to accumulate in the pipe bottom, whereby a liquid is injected through jet means located in the vicinity of the pipe bottom, characterised in that the liquid is injected through a pair of opposed jets arranged at substantially the same level forming two separate streams having components of motion in opposite lateral directions, which streams give rise to two eddies which result in twin-cell rotation of the material.

3. A method according to claim 2, characterised in that a third jet is provided causing a stream of liquid impinging vertically downwards on the pipe bottom.

4. A method according to claim 1 or 3, wherein two or more pairs of streams are injected into the pipe at different levels so that each pair contributes to the twin-cell rotation.

5. A method according to claim 4, wherein the closer each pair of streams is to the centre of the pipe, the lower is the energy with which it is injected into the pipeline.

6. A method according to any of claims 1 or 3 to 5, wherein two or more pairs of streams are injected into the pipe, the two streams of each pair being injected in opposite directions along the same chord of the pipe cross-section, the pairs of streams being spaced apart and parallel to one another.

7. A method according to any preceding claim, wherein the jet or jets (10, 10a, 10b, 10c) are located in a tube or tubes (14) which project into the pipe.

8. A method according to claim 7, wherein the tube has two or more jets (15) in the same plane and arranged at various angles.

9. A method according to any preceding claim, characterised in that the material flowing through the pipe is oil containing a small proportion of water which forms the second phase.

10. Apparatus for carrying out the method of claim 1, comprising a length of substantially horizontal pipe, and a jet within the pipe, characterised in that the jet (200) is at the end of a tube (14) within the pipe (1) and that a flow divider (100) is aligned with the jet (200) so that fluid emerging from the jet impinges on the flow divider (100) which divides said fluid into two streams with components of motion in opposite lateral directions, which streams give rise to two eddies (400) which result in twin-cell rotation of the material flowing in the pipe.

11. Apparatus for carrying out the method of claim 2, comprising a length of substantially horizontal pipe, and jet means within the pipe, characterised in that a pair of opposed jets (10a, 10c, 202) at substantially the same level are located within the pipe (1) so as to form two separate streams (600), which streams give rise to two eddies which result in twin-cell rotation of the material.

12. Apparatus according to claim 10, characterised in that the flow divider (100) is in the form of a sole plate.

13. Apparatus according to claim 12, characterised in that the sole plate is in the form of a cuspate prismoid or a triangular prism.

14. Apparatus according to any of claims 10 to 13, characterised in that the tube (14) is retractable from the pipe.

## Revendications

1. Procédé pour agiter un fluide liquide passant dans une partie essentiellement horizontale d'un tuyau de section circulaire, ce fluide liquide étant constitué d'une première et d'une seconde phase de densités différentes, de telle manière que la phase la plus lourde tende à s'accumuler dans le bas du tuyau, ce procédé utilisant un liquide injecté par un jet placé au voisinage du bas du tuyau, procédé caractérisé en ce que le liquide est injecté de manière à venir frapper un diviseur de débit placé sur la paroi ou près de la paroi du tuyau, ce qui permet de diviser ce liquide pour former deux courants séparés se déplaçant dans des directions latérales opposées pour donner naissance à deux tourbillons produisant une rotation du fluide en tourbillons jumeaux.

2. Procédé pour agiter un fluide liquide passant dans une partie essentiellement horizontale d'un tuyau de section circulaire, ce fluide liquide étant constitué d'une première et d'une seconde phase de densités différentes, de telle manière que la phase la plus lourde tend à s'accumuler dans le bas du tuyau, ce procédé utilisant un liquide injecté par des moyens de jets placés au voisinage du fond du tuyau, procédé caractérisé en ce que le liquide est injecté par une paire de jets opposés disposés exactement au même niveau et formant deux courants séparés dont les composantes de mouvement se situent dans des directions latérales opposées, ces courants donnant naissance à deux tourbillons produisant une rotation du fluide en tourbillons jumeaux.

3. Procédé selon la revendication 2, caractérisé en ce qu'il utilise un troisième jet produisant un courant de liquide venant frapper, verticalement vers le bas, le bas du tuyau.

4. Procédé selon l'une quelconque des revendications 1 ou 3, caractérisé en ce que deux ou plusieurs paires de courants sont injectées dans le tuyau à des niveaux différents, de telle manière que chaque paire contribue à produire la rotation en tourbillons jumeaux.

5. Procédé selon la revendication 4, caractérisé en ce que plus chaque paire de courants est proche du centre du tuyau, plus l'énergie avec laquelle cette paire de courants est injectée dans le tuyau, est faible.

6. Procédé selon l'une quelconque des revendications 1 ou 3 ou 5, caractérisé en ce que deux ou plusieurs paires de courants sont injectées dans le tuyau, les deux courants de chaque paire étant injectés dans des directions opposées le long de la même corde de la section du tuyau, ces paires de courants étant espacées et parallèles l'une à l'autre.

7. Procédé selon l'une quelconque des revendications précédentes, caractérisé en ce que le jet ou les jets (10, 10a, 10b, 10c) sont placés dans un tube ou dans des tubes (14) faisant saillie à l'intérieur du tuyau.

8. Procédé selon la revendication 7, caractérisé en ce que le tube comporte deux ou plusieurs jets (15) disposés dans le même plan suivant différents angles.

9. Procédé selon l'une quelconque des revendications précédentes, caractérisé en ce que le fluide passant dans le tuyau est du pétrole contenant une petite proportion d'eau constituant la seconde phase.

10. Appareil pour la mise en oeuvre du procédé selon la revendication 1, comprenant une longueur de tuyau essentiellement horizontale, et un jet situé à l'intérieur du tuyau, appareil caractérisé en ce que le jet (200) se trouve à l'extrémité d'un tube (14) placé à l'intérieur du tuyau (1) et en ce qu'un diviseur de débit (100) est aligné avec le jet (200) de façon que le fluide émergeant du jet vienne frapper le diviseur de débit (100) divisant ce fluide en deux courants dont les composantes de mouvement sont dirigées dans des directions latérales opposées, ces courants donnant naissance à deux tourbillons (400) produisant une rotation en tourbillons jumeaux de fluide circulant dans le tuyau.

11. Appareil pour la mise en oeuvre du procédé selon la revendication 2, comprenant une longueur de tuyau essentiellement horizontale, et des moyens de jets situés à l'intérieur du tuyau, appareil caractérisé en ce qu'une paire de jets opposés (10a, 10c, 202) situés exactement au même niveau, sont placés dans le tuyau (1) de manière à former deux courants séparés (600), ces courants donnant naissance à deux tourbillons produisant une rotation du matériau en tourbillons jumeaux.

12. Appareil selon la revendication 10, caractérisé en ce que le diviseur de débit (100) se présente sous la forme d'une plaque de semelle.

13. Appareil selon la revendication 12, caractérisé en ce que la plaque de semelle se présente sous la forme d'un prismoïde à pointe curviligne ou d'un prisme triangulaire.

14. Appareil selon l'une quelconque des revendications 10 à 13, caractérisé en ce que le tube (14) est rétractable par rapport au tuyau.

**Patentansprüche**

1. Verfahren zum Aufrühren eines flüssigen Materials, das entlang einem im wesentlichen horizontalen Abschnitt einer Rohrleitung mit kreisförmigem Querschnitt fließt, welches flüssige Material erste und zweite Phasen unterschiedlicher Dichte aufweist, so daß die Phase größerer Schwere dazu neigt, sich am Rohrleitungsboden anzusammeln, bei dem durch eine im Bereich des Rohrleitungsbodens angeordnete Düse eine Flüssigkeit eingespritzt wird, dadurch gekennzeichnet, daß die Flüssigkeit derart eingespritzt wird, daß sie auf einen auf oder nahe der Rohrleitungswand vorgesehenen Strömungsteiler auftrifft, wodurch sie geteilt wird, um zwei getrennte Ströme zu bilden, deren Bewegung in entgegengesetzte seitliche Richtungen geht, und zwei Wirbel entstehen läßt, aus denen sich eine Doppelzellrotation des Materials ergibt.

2. Verfahren zum Aufrühren eines flüssigen Materials, das entlang einem im wesentlichen horizontalen Abschnitt einer Rohrleitung mit kreisförmigem Querschnitt fließt, welches flüssige Material erste und zweite Phasen unterschiedlicher Dichte aufweist, so daß die Phase größerer Schwere dazu neigt, sich am Rohrleitungsboden anzusammeln, bei dem durch ein im Bereich des Rohrleitungsbodens angeordnetes Düsenmittel eine Flüssigkeit eingespritzt wird, dadurch gekennzeichnet, daß die Flüssigkeit durch ein Paar einander gegenüber und in im wesentlichen gleicher Höhe angeordneter Düsen eingespritzt wird, wodurch sich zwei getrennte Ströme mit Bewegungskomponenten bilden, die in entgegengesetzte seitliche Richtungen gehen, welche Ströme zwei Wirbel entstehen lassen, aus denen sich eine Doppelzellrotation des Materials ergibt.

3. Verfahren nach Anspruch 2, dadurch gekennzeichnet, daß eine dritte Düse vorgesehen ist, die das Auftreffen eines Flüssigkeitsstrahles senkrecht nach unten auf den Rohrleitungsboden verursacht.

4. Verfahren nach Anspruch 1 oder 3, dadurch gekennzeichnet, daß zwei oder mehrere Strahlenpaare in unterschiedlicher Höhe in die Rohrleitung gespritzt werden, so daß jedes Strahlenpaar zu der Doppelzellrotation beiträgt.

5. Verfahren nach Anspruch 4, dadurch gekennzeichnet, daß die Energie, mit der die Flüssigkeit in die Rohrleitung gespritzt wird, abnimmt, je näher das jeweilige Strahlenpaar an der Rohrleitungsmitte angeordnet ist.

6. Verfahren nach einem der Ansprüche 1 oder 3 bis 5, dadurch gekennzeichnet, daß zwei oder mehrere Strahlenpaare in die Rohrleitung gespritzt werden, daß die beiden Strahlen jedes Paares entlang derselben Kreissehne des Rohrleitungsquerschnittes in entgegengesetzte Richtungen gespritzt werden, und daß die Strahlenpaare räumlich voneinander getrennt und parallel zueinander angeordnet sind.

7. Verfahren nach einem der vorangehenden Ansprüche, dadurch gekennzeichnet, daß die Düse oder die Düsen (10, 10a, 10b, 10c) in einem Rohr oder in Röhren (14) angeordnet sind, die in die Rohrleitung hineinragen.

8. Verfahren nach Anspruch 7, dadurch gekennzeichnet, daß das Rohr zwei oder mehrere Düsen (15) auf derselben Ebene aufweist, die in unterschiedlichen Winkeln angeordnet sind.

9. Verfahren nach einem der vorangehenden Ansprüche, dadurch gekennzeichnet, daß das durch die Rohrleitung fließende Material Öl mit einem kleinen Anteil Wasser ist, das die zweite Phase darstellt.

10. Vorrichtung zur Durchführung des Verfahrens nach Anspruch 1, die einen Abschnitt einer im wesentlichen horizontalen Rohrleitung und eine Düse in der Rohrleitung enthält, dadurch gekennzeichnet, daß die Düse (200) sich am Ende eines Rohres (14) in der Rohrleitung (1) befindet, und daß ein Strömungsteiler (100) mit der Düse (200) ausgerichtet ist, so daß ein aus der Düse austretendes Fluid auf den Strömungsteiler (100) auftrifft, der das genannte Fluid in zwei Ströme mit Bewegungskomponenten in einander entgegengesetzte seitliche Richtungen aufteilt, welche Strömungen zwei Wirbel (400) entstehen lassen, aus denen sich eine Doppelzellrotation des in der Rohrleitung fließenden Materials ergibt.

11. Vorrichtung zur Durchführung des Verfahrens nach Anspruch 2, die einen Abschnitt einer im wesentlichen horizontalen Rohrleitung und Düsenmittel in der Rohrleitung enthält, dadurch gekennzeichnet, daß ein Paar einander entgegengesetzter Düsen (10a, 10c, 202) auf im wesentlichen gleicher Ebene in der Rohrleitung (1) angeordnet sind, so daß sie zwei getrennte Ströme (600) bilden, die zwei Wirbel verursachen, die eine Doppelzellrotation des Materials verursachen.

12. Vorrichtung nach Anspruch 10, dadurch gekennzeichnet, daß der Strömungsteiler (100) in der Form einer Sohlplatte ausgebildet ist.

13. Vorrichtung nach Anspruch 12, dadurch gekennzeichnet, daß die Sohlplatte in der Form eines spitzen Prismatoiden oder eines dreieckigen Prismas ausgebildet ist.

14. Vorrichtung nach einem oder mehreren der Ansprüche 10 bis 13, dadurch gekennzeichnet, daß das Rohr (14) aus der Rohrleitung zurückziehbar ist.

FIG.1.

FIG.2.

FIG.3.

FIG.3a.

FIG.3b.

FIG.4.

FIG.5.

FIG.6.

FIG. 7.

FIG. 8.